(19) Europäisches Patentamt
European Patent Office
Office européen des brevets

(11) Veröffentlichungsnummer: **0 677 547 A1**

# (12) EUROPÄISCHE PATENTANMELDUNG

(21) Anmeldenummer: **95104947.7**

(22) Anmeldetag: **03.04.95**

(51) Int. Cl.[6]: **C08J 7/06**, C08K 5/3475

(30) Priorität: **15.04.94 DE 4413005**

(43) Veröffentlichungstag der Anmeldung:
**18.10.95 Patentblatt 95/42**

(84) Benannte Vertragsstaaten:
**BE CH DE FR GB IT LI NL**

(71) Anmelder: **BAYER AG**
**D-51368 Leverkusen (DE)**

(72) Erfinder: **Buekers, Josef**
**Kneinstrasse 58a**
**D-47807 Krefeld (DE)**
Erfinder: **Bier, Peter, Dr.**
**Bethelstrasse 18**
**D-47800 Krefeld (DE)**
Erfinder: **Grigo, Ulrich, Dr.**
**Michelsheide 9**
**D-47906 Kempen (DE)**

## (54) Verfahren zur Herstellung von hochwärmeformbeständigen, UV-geschützten optischen Teilen.

(57) Gegenstand der vorliegenden Erfindung sind ein Verfahren zum Imprägnieren von Formteilen aus speziellen Polycarbonaten mit Lösungen von speziellen UV-Absorbern, die erfindungsgemäß erhältlichen optischen Teile und ihre Verwendung als Kraftfahrzeugstreuscheiben oder als Lampenabdeckungen.

EP 0 677 547 A1

Die meisten organischen Polymere erfahren bei thermischer Belastung oder erhöhter UV-Beanspruchung einen Abbau, der sich in Form von Farbveränderung, Vergilbung, allgemein durch Reduzierung der Eigenschaften ausdrückt.

Werden diese Polymere einer thermischen Belastung und gleichzeitig einer zusätzlichen UV-Beanspruchung ausgesetzt, so tritt durch Synergismus ein verstärkter Polymerabbau ein.

Für spezielle Anwendungen im Automobilbereich (Streuscheiben, innere Linsen) werden hohe Anforderungen hinsichtlich Thermobeständigkeit und Beständigkeit gegenüber UV-Beanspruchung gestellt.

Hierfür sind Polycarbonate geeignet, die sowohl hohe Temperaturbeständigkeit und zusätzlich hohe UV-Stabilität aufweisen.

Ziel der vorliegenden Erfindung war es, hochwärmeformbeständigen Polycarbonaten auf Basis von speziellen Dihydroxydiarylalkanen durch ein geeignetes Verfahren einen vollen UV-Schutz zu geben, um obige Anwendungsanforderungen zu bestehen.

Polycarbonate auf Bisphenol-A-Basis lassen sich nach bekannten Verfahren gegen UV-Beanspruchung stabilisieren. Beispiele hierfür sind beschrieben in EP 338 355 und US 4 861 664.

Die in diesen Anmeldungen beschriebenen Produkte erfüllen nicht die für obige Anwendungen geforderte Wärmeformbeständigkeit.

Als weiteres Beispiel gilt EP 416 404 (Le A 27 117), worin hochwärmeformbeständige Polycarbonate mit UV-Schutz aufgeführt sind.

Hier ist der UV-Schutz jedoch nicht ausreichend, da die Einarbeitung des UV-Absorbers über die Masse erfolgt und somit die Konzentration des UV-Absorbers in der Formteiloberfläche für obige Anwendungen zu gering ist.

Gegenstand der vorliegenden Erfindung ist somit ein Verfahren zur Herstellung von optischen Teilen, das dadurch gekennzeichnet ist, daß diese Teile durch Oberflächenimprägnierung von entsprechenden Formkörpern eines hochwärmeformbeständigen Polycarbonats aus 5 Mol-% bis 100 Mol-% Carbonat-Struktureinheiten der Formel (I), bezogen jeweils auf die Gesamtmenge von 100 Mol-% an difunktionellen Carbonatstruktureinheiten im Polycarbonat,

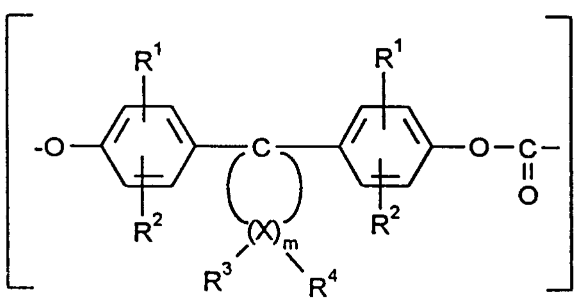

(I)

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl und $C_7$-$C_{12}$-Aralkyl, bevorzugt Phenyl-$C_1$-$C_4$-alkyl, insbesondere Benzyl, |
| m | eine ganze Zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten,

mit Lösungen von UV-Absorbern der allgemeinen Formeln (A) oder (B)

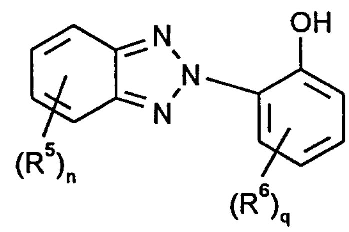

(A)

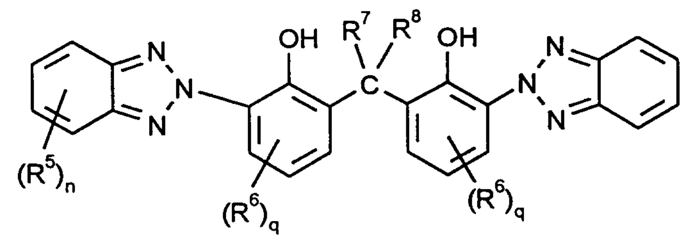

(B)

worin

| | |
|---|---|
| $R^5$ und $R^6$ | unabhängig voneinander Wasserstoff, Halogen, $C_1$-$C_{10}$-Alkyl, $C_5$-$C_{10}$-Cycloalkyl, $C_6$-$C_{14}$-Aryl, $C_7$-$C_{13}$-Aralkyl, O-$R^9$ oder -COO$R^9$, |
| $R^9$ | H oder $C_1$-$C_4$-Alkyl, |
| $R^7$ und $R^8$ | unabhängig voneinander Wasserstoff, $C_1$-$C_4$-Alkyl, $C_5$-$C_6$-Cycloalkyl, $C_6$-$C_{14}$-Aryl, $C_7$-$C_9$-Aralkyl bedeuten, |
| q | 1, 2 oder 3 und |
| n | 1, 2, 3 oder 4 sind, |

oder (C)

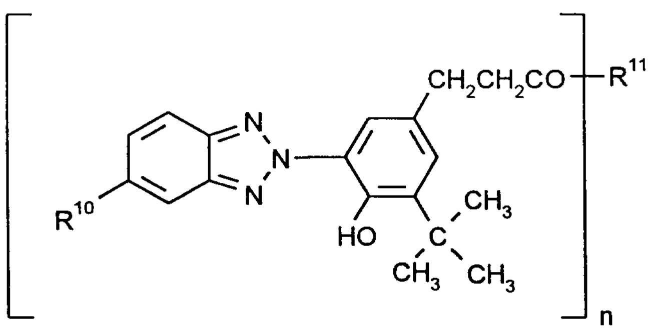

(C)

worin

| | |
|---|---|
| $R^{10}$ | H, Cl, $C_1$-$C_4$-Alkyl oder $C_1$-$C_4$-Alkoxy und |
| n | eine der Zahlen 1 oder 2 bedeuten und |
| $R^{11}$ | im Falle von n = 1, Cl, OH, O-$C_1$-$C_{18}$-Alkyl oder |

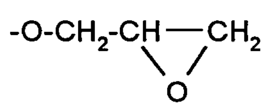

ist und im Falle von n = 2 einen zweiwertigen Rest -O-$R^{12}$-O- bedeutet, worin $R^{12}$ $C_2$-$C_8$-Alkylen, Cyclohexylen oder durch -O- unterbrochenes $C_4$-$C_{10}$-Alkylen ist,

oder (D)

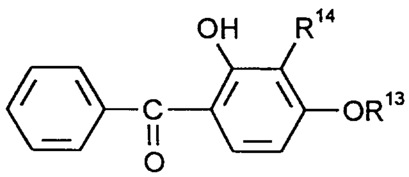

(D)

worin

$R^{13}$ Wasserstoff, Halogen, $C_1$-$C_{15}$-Alkyl, $C_5$-$C_{10}$-Cycloalkyl, $C_6$-$C_{14}$-Aryl oder $C_7$-$C_{13}$-Aralkyl und

$R^{14}$ Wasserstoff oder -$SO_3$-Salz ist,

hergestellt werden.

Gegenstand der vorliegenden Erfindung sind außerdem die nach dem erfindungsgemäßen Verfahren erhältlichen optischen Teile.

Die erfindungsgemäß erhältlichen optischen Teile sind insbesondere als Kraftfahrzeugstreuscheiben und als Lampenabdeckungen geeignet, da sie gegen UV-Licht geschützt und bei Temperaturen oberhalb von 140 °C einsetzbar sind.

Gegenstand der vorliegenden Erfindung ist somit auch die Verwendung der nach dem erfindungsgemäßen Verfahren erhältlichen optischen Teile als Kraftfahrzeugstreuscheiben oder als Lampenabdeckungen.

Hochwärmeformbeständige Polycarbonate im Sinne der Erfindung aus 5 Mol-% bis 100 Mol-% Carbonatstruktureinheiten der Formel (I) sind literaturbekannt (siehe beispielsweise US-PS 4 982 014 bzw. DE-OS 38 32 396).

Bevorzugte Mengen an Carbonatstruktureinheiten der Formel (I) sind 10 Mol-% bis 100 Mol-% und insbesondere 30 Mol-% bis 100 Mol-%.

Bevorzugte Carbonatstruktureinheiten der Formel (I) sind solche der Formeln (Ia), (Ib) und (Ic)

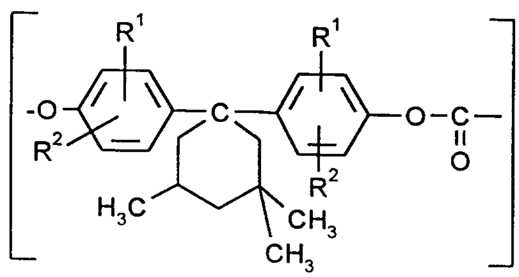

(Ia),

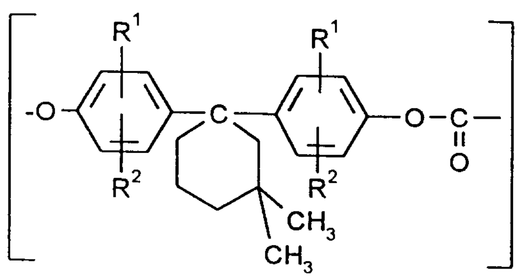

(Ib),

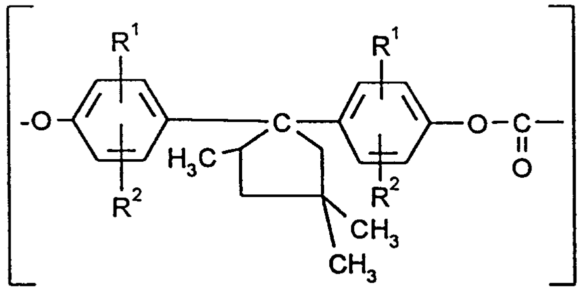

(Ic),

worin
$R^1$ und $R^2$ die für Formel (I) genannte Bedeutung haben, insbesondere aber H bedeuten.

Die hochwärmeformbeständigen Polycarbonate enthalten somit jeweils zu 100 Mol-% komplementäre Mengen an anderen difunktionellen Carbonatstruktureinheiten, vorzugsweise solchen der Formel (II)

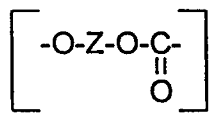

(II),

worin
-O-Z-O- ein beliebiger anderer Diphenolat-Rest ist, also in Mengen von 0 Mol-% (einschließlich) bis 95 Mol-%, vorzugsweise von 0 Mol-% bis 90 Mol-% und insbesondere von 0 Mol-% bis 70 Mol-%.

In Formel (II) ist -Z- ein aromatischer Rest mit 6 bis 30 C-Atomen, der einen oder mehrere aromatische Kerne enthalten kann, substituiert sein kann und aliphatische oder andere cycloaliphatische Reste als die in Formel (I) oder Heteroatome als Brückenglieder enthalten kann.

Bevorzugte andere, difunktionelle Carbonatstruktureinheiten sind solche der Formel (IIa)

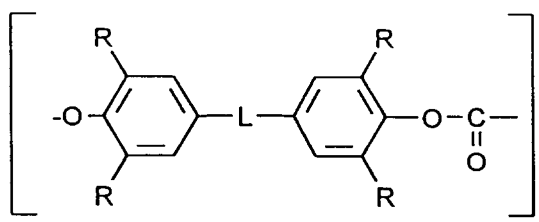

(IIa)

worin
R H, Cl, Br oder $CH_3$ und
-L- $C_1$-$C_7$-Alkyliden, $C_5$-$C_6$-Cycloalkyliden, $-SO_2-$, -S-, -O- oder eine Einfachbindung ist.

Besonders bevorzugt sind R = H und -L- Isopropyliden, Methylen und Cyclohexyliden.

Die hochwärmeformbeständigen Polycarbonate haben Molekulargewichte $\overline{M}w$ (Gewichtsmittel, ermittelt durch Gelchromatographie nach vorheriger Eichung) von 10 000 bis 200 000, vorzugsweise von 20 000 bis 80 000, sie können linear oder in bekannter Weise verzweigt sein und sind Homopolycarbonate oder Copolycarbonate auf Basis der Carbonatstrukturen (I). Als Endgruppen sind die im US-Patent 49 82 014 aufgeführten geeignet.

Die Verarbeitung der hochwärmeformbeständigen Polycarbonate zu entsprechenden Formteilen, die dann erfindungsgemäß imprägniert werden, erfolgt ebenfalls in literaturbekannter Weise (siehe beispielsweise US-PS 49 82 014, Spalte 11, Zeile 65 bis Spalte 12, Zeile 20), also durch Extrusion oder Spritzguß, vorzugsweise durch Spritzguß.

Beispiele für Formteile sind Massivplatten, Hohlkammerplatten, Flaschen, Schalen, Scheinwerfer oder andere Beleuchtungskörper.

Vor der Verarbeitung der hochwärmeformbeständigen Polycarbonate können diesen noch die für Polycarbonate üblichen Additive, wie Thermostabilisatoren, Flammschutzmittel oder Entformungsmittel, in dem für Polycarbonate üblichen Mengen in bekannter Weise eingearbeitet werden.

Die UV-Absorber der allgemeinen Formel (A) sind literaturbekannt und im Handel erhältlich.

Die UV-Absorber der allgemeinen Formel (B) sind ebenfalls literaturbekannt (siehe beispielsweise EP 0 338 355 und EP 0 416 404) und im Handel erhältlich.

Die UV-Absorber der allgemeinen Formen (C) sind ebenfalls literaturbekannt (siehe beispielsweise EP 0 057 160 und US-PS 4 861 664) und im Handel erhältlich.

Die UV-Absorber der allgemeinen Formel (D) sind ebenfalls literaturbekannt (siehe beispielsweise Gächter/Müller: Kunststoff-Additive, Karl Hanser Verlag, München (1990) S 181-185).

Beispiele für die einzusetzenden UV-Absorber (A) sind
Tinuvin P: 2-(2'-Hydroxi-5'-methyl-phenyl)-benztriazol
Tinuvin 350: 2-[2'-Hydroxi-3'-(2-butyl)-5-(tert.-butyl)-phenyl]-benztriazol

Beispiele für die einzusetzenden UV-Absorber (B) sind

Tinuvin 360/Stab. LA 31:
Bis-[3-(2H-benztriazolyl)-2-hydroxi-5-tert.-octyl]-methan

Beispiele für die einzusetzenden UV-Absorber (C) sind

Tinuvin 840: 3-(2H-benztriazol-2-yl)-5-(1,1-dimethyl-ethyl)-4-hydroxi-1,6-hexandiyl-benzolpropionsäureester

Beispiele für die einzusetzenden UV-Absorber (D) sind

Chimasorb 90: 2-Hydroxi-4-methoxi-benzophenon
Uvinul MS 40: 2-Hydroxi-4-methoxi-benzophenon-3-sulfonsaures-Na-salz

Erfindungsgemäß zu verwendende Lösungen der UV-Absorber (A), (B), (C) und (D) sind solche in organischen Lösungsmitteln, vorzugsweise in halogenfreien organischen Lösungsmitteln.

Unter "halogenfreien" Lösungsmitteln werden solche Lösungsmittel verstanden, die kein Halogen enthalten, insbesondere chlor- und bromfrei sind. Im einzelnen sind darunter z.B. zu verstehen:

- aliphatische, cycloaliphatische, aromatische Kohlenwasserstoffe, wie z.B. Toluol, Xylol,
- Ketone, wie z.B. Aceton, Methylisobutylketon, Isophoron oder Butanon,
- Ester, wie z.B. Ethylacetat, Butylacetat oder Glykolsäurebutylester,
- Ether insbesondere Glykolether, wie z.B. Tetrahydrofuran, Ethylenglykolmonoethyletheroder Diethylenglykol-mono-methylether, und
- Alkohole, wie z.B. Cyclohexanol oder Diacetonalkohol.

Besonders bevorzugte Lösungsmittel sind Toluol, Xylol, Tetrahydrofuran, Essigsäuremethylester, Essigsäureethylester und Methyl-ethyl-keton.

Ganz besonders bevorzugte Lösungsmittel sind Toluol, Tetrahydrofuran, Essigsäureethylester und Methyl-ethyl-keton.

Die Konzentration der UV-Absorber in den Lösungen der organischen Lösungsmittel liegt erfindungsgemäß zwischen 0,3 Gew.-% und 20 Gew.-%, vorzugsweise zwischen 2 Gew.-% und 10 Gew.-%.

Das Imprägnieren von thermoplastischem Polycarbonat ist im Prinzip bekannt (siehe beispielsweise US-'S 48 61 664).

Das Imprägnieren der Formkörper aus den hochwärmeformbeständigen Polycarbonaten erfolgt im einzelnen beispielsweise in der Weise, daß man die zu imprägnierenden Formkörper in die vorstehend beschriebenen Lösungen für eine Zeit von 10 Sekunden bis 5 Minuten, vorzugsweise von 1 Minute bis 3 Minuten bei Temperaturen von 23 °C bis 50 °C, vorzugsweise bei Raumtemperatur eintaucht.

Anschließend werden die Formkörper bei Temperaturen von 50 °C bis 150 °C, vorzugsweise bei Temperaturen von 80 °C bis 120 °C getrocknet.

Die so erhaltenen imprägnierten Formteile aus den hochwärmeformbeständigen Polycarbonaten sind dann unmittelbar für die technischen Zwecke, also beispielsweise als Kraftfahrzeugstreuscheiben oder als Lampenabdeckungen einsatzbereit.

## Beispiele

Verwendete Materialien

I) Aromatische Copolycarbonate aus 35 Mol-% 1,1-Bis-(4-hydroxyphenyl)-3,3,5-trimethyl-cyclohexan und 65 Mol-% 2,2-Bis-(4-hydroxyphenyl)-propan mit einer relativen Viskosität, gemessen in $CH_2Cl_2$ bei 25 °C von 1,29 (in 0,5 Gew.-% Lösung)

II) Tinuvin 350
2-[2'-Hydroxi-3'-(2-butyl)-5'-(tert.-butyl)-phenyl]-benztriazol

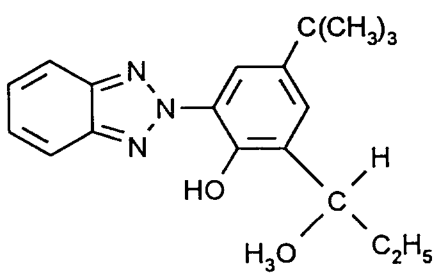

III) Tinuvin 840
3-(2H-benztriazol-2-yl)-5-(1,1-dimethyl-ethyl)-4-hydroxi- 1,6-hexandiylbenzolpropionsäureester

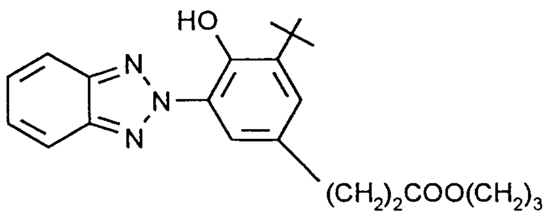

IV) Chimasorb 90
2-Hydroxi-4-methoxi-benzophenon

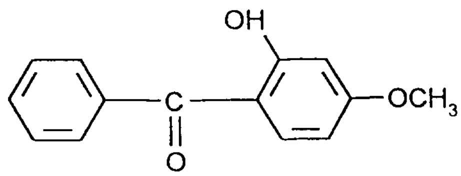

V) Essigsäurebutylester
VI) Methyl-ethylketon (2-Butanon)
VII) Tetrahydrofuran

Geprüfte Lösungen: (Angaben in Gew.-Teilen)

| Komponente | I | II | III | IV | V | VI | VII |
|---|---|---|---|---|---|---|---|
| Vergleich 1 | 100 | | | | | | |
| Beispiele 1 | | 3 | | | 97 | | |
| 2 | | 5 | | | 95 | | |
| 3 | | 10 | | | 90 | | |
| 4 | | 20 | | | 80 | | |
| 5 | | | 2 | | | 98 | |
| 6 | | | 5 | | | 95 | |
| 7 | | | 10 | | | | 90 |
| 8 | | | | 5 | 95 | | |

## Herstellung und Prüfung der Imprägnierung

Formkörper aus aromatischem Polycarbonat, z.B. Musterplatten in der Größe 60 x 40 x 2 mm werden in eine Lösung aus 2 bis 15 % UV-Absorber in Essigsäurebutylester, Methyl-ethylketon oder Tetrahydrofuran 1 Minute getaucht. Hiernach werden die Musterplatten 1 Minute bei Raumtemperatur abgelüftet und 2 bis 5 Minuten bei 120 °C in einem Trockenschrank getrocknet. Die so erhaltenen Formkörper haben eine gute optische Qualität und sind für den optischen Einsatz zu verwenden.

Diese Formkörper werden in einem Modellscheinwerfer mit einer handelsüblichen H3 oder H4-Lampe (Angros) belichtet. Die gemessenen Oberflächen-Temperaturen liegen in einem Bereich von 160 bis 165 °C. Nach einer Belichtungsdauer von 200 Stunden wird die Vergilbung nach DIN 5033 gemessen und der Yellownessindex nach ASTM-D 1925 ausgewertet.

Ergebnisse:

| | Yellowness-Index DIN 5033/ASTM-D 1925 |
|---|---|
| Vergleich | 16 |
| Beispiel 1 | 8 |
| 2 | 6 |
| 3 | 9 |
| 4 | 10 |
| 5 | 8 |
| 6 | 8 |
| 7 | 8 |
| 8 | 8 |

Die Ergebnisse zeigen deutlich eine wesentlich bessere UV-Beständigkeit durch das in der Erfindung beanspruchte Verfahren.

Die Formkörper zeigen keinerlei Verformung durch Hitzeeinwirkung.

## Patentansprüche

**1.** Verfahren zur Herstellung von optischen Teilen, dadurch gekennzeichnet, daß diese Teile durch Oberflächenimprägnierung von entsprechenden Formkörpern eines hochwärmeformbeständigen Polycarbonats aus 5 Mol-% bis 100 Mol-% Carbonat-Strukturelemente der Formel (I), bezogen jeweils auf die Gesamtmenge von 100 Mol-% an difunktionellen Carbonatstruktureinheiten im Polycarbonat,

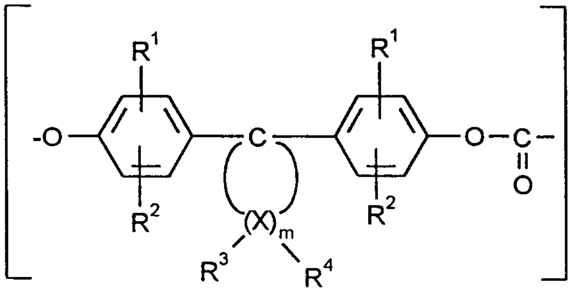

(I)

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl, |
| m | eine ganze Zahl von 4 bis 7, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitigAlkyl bedeuten,

mit Lösungen von UV-Absorbern der allgemeinen Formeln (A) oder (B)

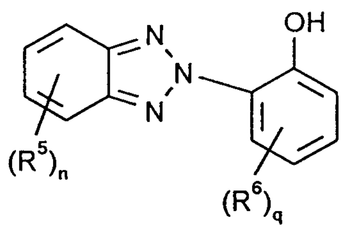

(A)

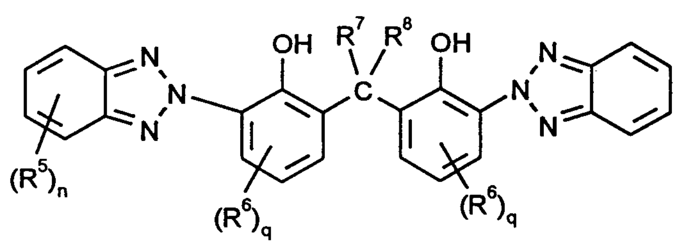

(B)

worin

| | |
|---|---|
| $R^5$ und $R^6$ | unabhängig voneinander Wasserstoff, Halogen, $C_1$-$C_{10}$-Alkyl, $C_5$-$C_{10}$-Cycloalkyl, $C_6$-$C_{14}$-Aryl, $C_7$-$C_{13}$-Aralkyl, O-$R^9$ oder -COOR$^9$, |
| $R^9$ | H oder $C_1$-$C_4$-Alkyl, |
| $R^7$ und $R^8$ | unabhängig voneinander Wasserstoff, $C_1$-$C_4$-Alkyl, $C_5$-$C_6$-Cycloalkyl, $C_6$-$C_{14}$-Aryl, $C_7$-$C_9$-Aralkyl bedeuten, |
| q | 1, 2 oder 3 und |
| n | 1, 2, 3 oder 4 sind, |

oder (C)

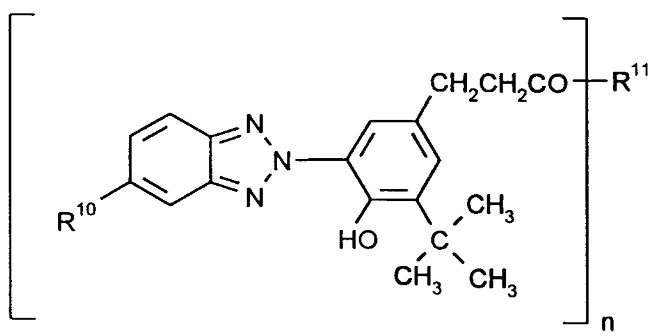

(C)

worin

| | |
|---|---|
| $R^{10}$ | H, Cl, $C_1$-$C_4$-Alkyl oder $C_1$-$C_4$-Alkoxy und |
| n | eine der Zahlen 1 oder 2 bedeuten und |
| $R^{11}$ | im Falle von n = 1, Cl, OH, O-$C_1$-$C_{18}$-Alkyl oder |

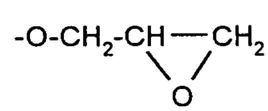

ist und im Falle von n = 2 einen zweiwertigen Rest -O-$R^{12}$-O- bedeutet, worin $R^{12}$ $C_2$-$C_8$-Alkylen, Cyclohexylen oder durch -O- unterbrochenes $C_4$-$C_{10}$-Alkylen ist,

oder (D)

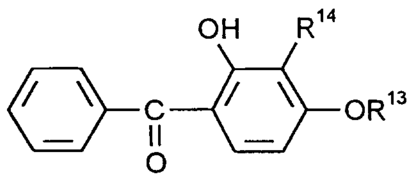

(D)

worin

R[13] Wasserstoff, Halogen, $C_1$-$C_{15}$-Alkyl, $C_5$-$C_{10}$-Cycloalkyl, $C_6$-$C_{14}$-Aryl oder $C_7$-$C_{13}$-Aralkyl und

R[14] Wasserstoff oder $SO_3$-Salz ist,

hergestellt werden.

**2.** Optische Teile erhältlich nach dem Verfahren des Anspruchs 1.

**3.** Verwendung der optischen Teile des Anspruchs 2 als Kraftfahrzeugstreuscheiben oder als Lampenabdeckungen.

Europäisches Patentamt

# EUROPÄISCHER RECHERCHENBERICHT

Nummer der Anmeldung
EP 95 10 4947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 169 446 (GENERAL ELECTRIC COMPANY)<br>* Anspruch 1 *<br>* Seite 3, Zeile 16 - Zeile 25 *<br>--- | 1 | C08J7/06<br>C08K5/3475 |
| A | US-A-4 776 913 (JOHN C. GOOSSENS)<br>* Anspruch 1 *<br>* Spalte 4, Zeile 55 - Spalte 5, Zeile 19 *<br>--- | 1 | |
| A,D | EP-A-0 416 404 (BAYER AG.)<br>* Anspruch 1 *<br>--- | 1 | |
| A | EP-A-0 197 508 (MOBAY CORPORATION)<br>* Ansprüche 1-10 *<br>----- | 1 | |

RECHERCHIERTE SACHGEBIETE (Int.Cl.6)
C08J
C08K

Der vorliegende Recherchenbericht wurde für alle Patentansprüche erstellt

| Recherchenort | Abschlußdatum der Recherche | Prüfer |
|---|---|---|
| DEN HAAG | 18.Juli 1995 | Depijper, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)